# EUROPÄISCHE PATENTSCHRIFT

(11) **EP 0 389 072 B1**
(45) Veröffentlichungstag und Bekanntmachung des Hinweises auf die Patenterteilung: **15.09.1993**
(21) Anmeldenummer: 90250063.6
(22) Anmeldetag: 08.03.1990
(51) Int. Cl.: H02K 7/12

(54) **Verschiebelaüfermotor**
Sliding rotor motor
Moteur à rotor coulissant

(30) Priorität: 21.03.1989 DE 3909771
(43) Veröffentlichungstag der Anmeldung: 26.09.1990
(73) Patentinhaber: MANNESMANN Aktiengesellschaft, 40027 Düsseldorf (DE)
(72) Erfinder: Bernd, Alfred, D-5804 Herdecke (DE); Hesse, Wilhem, Dr.-Ing., D-4320 Hattingen (DE); England, Willi, Ing.-(grad.), D-5802 Wetter 4 (DE); Staggl, Roland, Ing., D-5802 Wetter 2 (DE); Flaig, Heinz, Dipl.-Ing., D-4630 Bochum (DE); Zacharias, Karl, Dipl.-Ing., D-5840 Schwerte (DE)
(74) Vertreter: Meissner, Peter E., Dipl.-Ing.

(56) Entgegenhaltungen:
- EP-A- 0 228 340

## Beschreibung

Die Erfindung betrifft einen Verschiebeläufermotor nach dem Oberbegriff des Hauptanspruches.

Bei einem Verschiebeläufermotor dieser Art nach der DE-PS 36 37 591 ist ein rahmenförmiges Verformungselement vorhanden, das auch aus einzelnen Stäben bestehen kann. Dieser einzelne Rahmen beschränkt die axiale Verschiebbarkeit der Welle und verlangt ein Größtmaß an Präzision, da das Verformungselement in radialer Richtung verformungssteif ist und als dritte Lagerstelle des Verschiebeläufers wirkt.

Aufgabe der Erfindung ist es daher, einen Verschiebeläufermotor so zu gestalten, daß das Verformungselement bei geringen Anforderungen an die Präzision einen größeren axialen Verschiebeweg des Verschiebeläufers zuläßt.

Diese Aufgabe wird dadurch gelöst, daß das Verformungselement aus zwei Rahmen (17, 17a) besteht, von welchen
- einer (17a) mit zwei seiner Befestigungsstellen (17b) mit einer mit der Verlängerung (31) des Verschiebeläufers verbundenen Anschlußplatte (19),
- der andere (17) mit zwei seiner Befestigungsstellen mit den Mitnehmerarmen (15a) des Tragringes (15)
- und beide mit ihren jeweils verbleibenden Befestigungsstellen (17c) über ein Übertragungselement (18) miteinander

verbunden sind.

Die Aufteilung des Verformungselementes auf zwei in einem von Zwischenelement bestimmten Abstand angeordnete Rahmen reduziert den Hub je Rahmen auf die Hälfte des Verschiebeläuferhubes zwischen Lauf- und Bremsstellung und schließt radiale Verspannungen und damit höhere Verschiebekräfte der den Verschiebeläufer tragenden Lager aufgrund der Winkelbeweglichkeit Systems aus.

In weiterer Ausgestaltung hat das Übertragungselement an seinen Enden koaxial zu den Befestigungsstellen Distanzhülsen für Nieten und eine Zentralbohrung zum Durchlaß der Welle. Die Anschlußplatte hat Anschlußvorsprünge mit Anschlußbohrungen zum Rahmen und neben dem geraden Bereich der Rahmen Bohrungen für Schrauben zur Befestigung an der Verlängerung des Verschiebeläufers. Die Schrauben verbinden auch den Bremsring mit der Verlängerung des Verschiebeläufers. Der Austausch des Bremsringes ist ohne vollständige Entspannung der Bremsfeder möglich. Die Anordnung von Ausnehmungen in der Verlängerung des Verschiebeläufers für die Mitnehmerarme ist so gewählt, daß bei Defekt des Verformungselementes die Mitnahme dennoch durchschlagsicher erfolgt.

Ein Ausführungsbeispiel der Erfindung ist in den Zeichnungen dargestellt und im folgenden erläutert. Es zeigen
- Fig. 1 und 2: Längsschnitte durch den Verschiebeläufermotor an verschiedenen Stellen,
- Fig. 3 die: Verformungselemente mit dem Übertragungselement in perspektivischer Darstellung,
- Fig. 4: die auseinandergezogenen Teile aus Fig. 3.

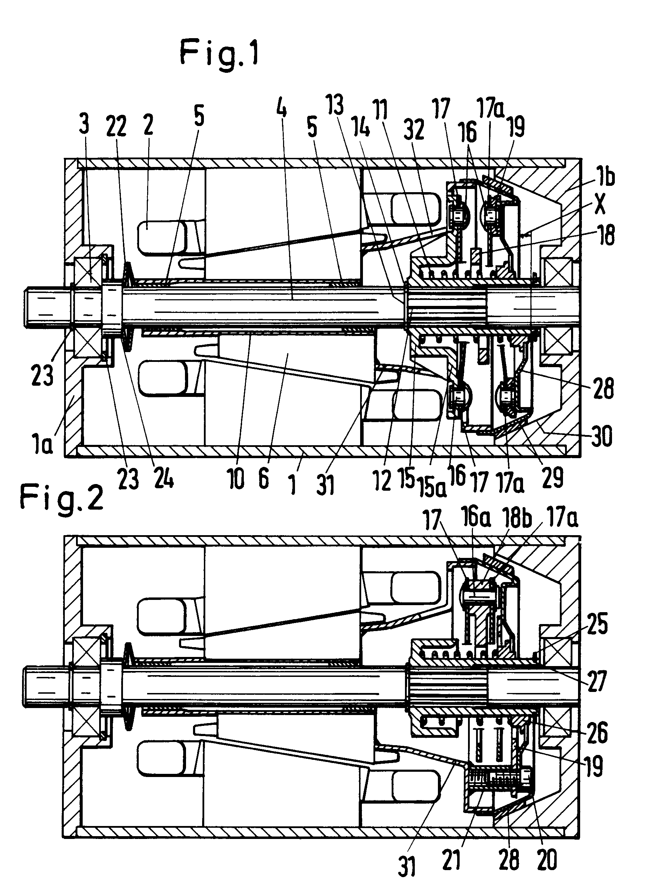

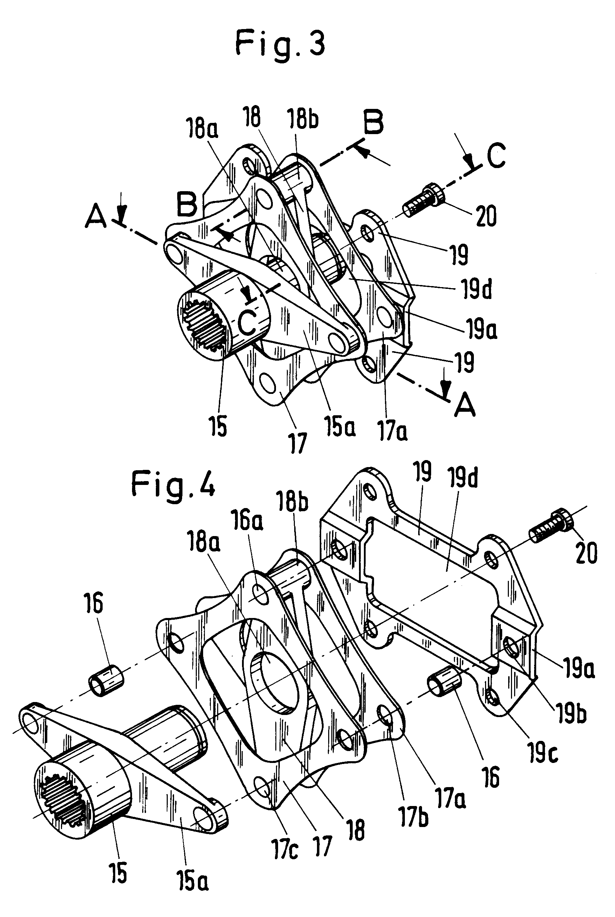

Fig. 1 zeigt den Längsschnitt an der Schnittebene A -A in Fig. 3; in der oberen Hälfte in Laufstellung und in der unteren Hälfte in Bremsstellung. In Fig. 2 ist die obere Hälfte ebenfalls in Laufstellung und die untere Hälfte in Bremsstellung gezeichnet. Der Schnittverlauf ist in der oberen Hälfte in der Schnittebene B - B durch das Übertragungselement und in der unteren Hälfte in der Schnittebene C - C durch die Schraube für die Anschlußplatte 19 zur Verlängerung 31 des Verschiebeläufers 6 eingetragen.

Im vereinfacht gezeichneten Motorgehäuse 1 ist eine Ständerwicklung 2 angeordnet, und die Stirnseiten 1a und 1b haben Lager 3 für eine Welle 4 auf der ein Verschiebeläufer 6 von einer Bremsfeder 11 mit seinem Bremsbelag 29 bis gegen eine Bremsfläche 30 verschiebbar ist, wie in Fig. 1 in der unteren Hälfte dargestellt. Der Verschiebeläufer 6 ist auf einem Rohr 10 befestigt und wird mittels Lagerbuchsen 5 auf der Welle 4 verschoben. Der Bremsbelag 29 ist auf einem Bremsring 28 befestigt und mit der Verlängerung 31 des Verschiebeläufers 6 verbunden, wie in Fig. 2 in der unteren Hälfte erkennbar ist.

Die Welle 4 hat im Bereich der Bremsfeder 11 eine Verzahnung 12 und eine Ringnut 13 für einen Sprengring 14, an dem sich ein über die Verzahnung 12 mit der Welle 4 drehender Tragring 15 abstützt. Dieser ist für die Aufnahme der Bremsfeder 11 als Doppelmantelring ausgebildet und hat in Fig. 1 und 3 erkennbare Mitnehmerarme 15a mit Bohrungen für Nieten 16 zur Befestigung des auch in Fig. 3 erkennbaren ersten Rahmens 17 des Verformungselementes an dem Tragring 15. Beim Vergleich der oberen Hälfte in Fig. 1 mit der unteren erkennt man, daß die Mitnehmerarme 15a nicht mit der Verlängerung 31 verbunden sind.

In allen Figuren ist zu erkennen, daß dem Rahmen 17 auf der anderen Seite eines Übertragungselementes 18 ein zweiter Rahmen 17a zugeordnet ist. Das Übertragungselement 18 hat an den Enden Distanzhülsen 18b für Nieten 16, die die beiden Rahmen 17 und 17a an zwei sich gegenüberliegenden Ecken miteinander verbinden. Ferner hat das Übertragungselement 18 eine Zentralbohrung 18a für den Durchlaß der Bremsfeder 11. Der verschieberläuferseitige Rahmen 17 ist über Nieten 16 mit dem Mitnehmerarm 15a des Tragringes verbunden. Der bremsseitige Rahmen 17a ist koaxial zu den Nieten 16 mittels weiterer Nieten 16 an Anschlußvorsprüngen 19a einer Anschlußplatte 19 befestigt. Die Anschlußvorsprünge 19a ermöglichen die freie Verformung des Rahmens 17a in der Laufstellung und schaffen Raum für den Kopf des Nietes 1b. Die Anschlußplatte 19 hat einen Zentraldurchbruch 19d für die Bremsfeder 11 und vier Bohrungen 19c für Schrauben 20, die in Distanzrohre 21 der Verlängerung 31 geschraubt sind. Damit wird auch die Bremsscheibe 28 mit dieser Verlängerung verbunden, wie in Fig. 2 in der unteren Hälfte gezeichnet ist.

Das Maß X in Fig. 1 ist der Hub des Verschiebeläufers zwischen der Lauf- und der Bremsstellung.

Der Verschiebeläufermotor ist in den Fig. 1 und 2 in der oberen Hälfte in Laufstellung gezeichnet und die Rahmen 17 und 17a des Verformungselementes sind im Bereich zwischen den Anschlußstellen zu dem Übertragungselement 18 und den Anschlußstellen zum Mitnehmerarm 15a bzw. Anschlußplatte 19 jeweils etwa um X/4 verformt. Bei der Bremsstellung nach Fig. 1 unten ist die Anschlußplatte 19 mit dem Bremsring 28 bis zur Anlage des Bremsbelages 29 an die Bremsfläche 30 verschoben und die Rahmen 17 und 17a sind jeweils etwa um X/4 entgegen der Laufstellung verformt.

Der Verschiebeläufer 6 ist mit einem Rohr 10 und Lagerbuchsen 5 auf der Welle 4 gelagert. Zum Dämpfen des Aufprallstoßes liegt das Rohr 10 des Verschiebeläufers 6 bei der Laufstellung über ein elastisches Dämpfungselement z.B. in Form von Tellerfedern 22 an einem Bund 24 der Welle 4 an, die über das bereits erwähnte Lager 3 und Sprengringe 23 im Gehäuse 1 axial fixiert ist.

Der Austausch des Bremsringes 28 kann ohne vollständige Entspannung der Bremsfeder 11 durchgeführt werden, indem diese beim Lösen der Schrauben 20 durch einen Zwischenring 26 und dieser durch einen Sicherungsring 25 gehalten wird, der in eine Nut 27 der Tragringes 15 eingreift. Hierbei ist das Freimaß für den Verschiebeweg des Zwischenringes 26 so groß, daß selbst bei extrem starkem Bremsbelagverschleiß das Freimaß nicht ausgenutzt wird und in dieser Situation die Einzugskraft für den Verschiebeläufer 6 nicht ausreicht diesen in Laufstellung zu bringen, so daß der Verschiebeläufer 6 sicher von der Bremse gehalten wird und nicht anlaufen kann.

Durch die Anordnung der axialeleastischen Rahmen 17 und 17a des Verformungselementes wird eine Radialelastizität erreicht, so daß die den Verschiebeläufer 6 tragenden Lagerbuchsen 5 nicht verspannt werden können. Die hohe Verdrehsteifigkeit und Spielfreiheit des vernieteten Momenten-Übertragungssystems (nach Fig. 3) verhindert Lastüberhöhungen, insbesondere beim Reversierbetrieb. Es ist wartungsfrei; das Funktionsverhalten wird nicht von Temperatur und Bremsstaub beeinflußt.

Die Mitnehmerarme 15a des Tragringes 15 ragen in Lauf- und Bremsstellung in Ausnehmungen 32 der Verlängerung 31 des Verschiebeläufers 6, so daß auch bei Ausfall der Rahmen 17, 17a eine durchschlagsichere Drehmomentmitnahme zwischen der Welle 4 und dem Verschiebeläufer 6 gewährleistet ist.

## Patentansprüche

1. Verschiebeläufermotor mit einem Ständer und einem relativ gegen die Kraft einer Bremsfeder (11) dazu axial verschiebbaren Verschiebeläufer (6), der mit einer Welle (4) verbunden ist, wobei die Welle in Lagerschilden eines Motorgehäuses gelagert ist und der Verschiebeläufer über ein auf der Welle (4) befestigtes, das Drehmoment übertragendes Verformungselement drehschlüssig auf der Welle abgestützt ist, wobei das Verformungselement einen Rahmen (17,17a) mit auf seinem Rand befindlichen Befestigungsstellen (17a,17c) aufweist, von denen jeweils zwei Befestigungsstellen (17b,17c) mit einer Verlängerung (31) des Verschiebeläufers (6) bzw. mit Mitnehmerarmen (15a) eines Tragringes (15) verbunden sind,
**dadurch gekennzeichnet**,
daß das Verformungselement aus zwei Rahmen (17, 17a) besteht, von welchen
- einer (17a) mit zwei seiner Befestigungsstellen (17b) mit einer mit der Verlängerung (31) des Verschiebeläufers verbundenen Anschußplatte (19) ,
- der andere (17) mit zwei seiner Befestigungsstellen mit den Mitnehmerarmen (15a) des Tragringes (15)
- und beide mit ihren jeweils verbleibenden Befestigungsstellen (17c) über ein Übertragungselement (18) miteinander
verbunden sind.

2. Verschiebeläufermotor nach Anspruch 1,
**dadurch gekennzeichnet**,
daß das Übertragungselement (18) an seinen Enden koaxial zu den Befestigungsstellen (17c) Distanzhülsen (18b) für Nieten (16a) und eine Zentralbohrung (18a) für den Durchlaß der Welle (4) hat.

3. Verschiebeläufermotor nach Anspruch 1,
**dadurch gekennzeichnet**,
daß die Anschlußplatte (19) Anschlußvorsprünge (19a) mit Anschlußbohrungen (19b) zum Rahmen (17a) hat und daß die Anschlußplatte (19) neben dem geraden Bereich der Rahmen (17, 17a) Bohrungen (19c) für Schrauben (20) zur Befestigung an der Verlängerung (31) des Verschiebeläufers hat.

4. Verschiebeläufermotor nach Anspruch 3,
**dadurch gekennzeichnet**,
daß die Schrauben (20) in Distanzrohre (21) geschraubt sind und den Bremsring (28) und die Anschlußplatte (19) mit der Verlängerung (31) des Verschiebeläufers verbinden.

5. Verschiebeläufermotor nach Anspruch 1,
**dadurch gekennzeichnet**,
daß die Rahmen (17, 17a) mittels Nieten (16) mit dem Übertragungselement (18), der Anschlußplatte (19) bzw. den Tragring (15) verbunden sind.

6. Verschiebeläufermotor nach Anspruch 1,
**dadurch gekennzeichnet**,
daß die Befestigungsstellen (17b) der Rahmen (17, 17a) koaxial zueinander angeordnet sind.

7. Verschiebeläufermotor nach Anspruch 1,
**dadurch gekennzeichnet**,
daß zwischen einem den Verschiebeläufer (6) tragenden Rohr (10) und einem Bund (24) der Welle (4) eine Dämpfungselement (22) angeordnet ist.

8. Verschiebeläufermotor nach Anspruch 1,
**dadurch gekennzeichnet**,
daß die Verlängerung (31) des Verschiebeläufers Ausnehmungen (32) für die Mitnehmerarme (15a) hat.

## Claims

1. Displacement-type rotor motor with a stator and a displacement-type rotor (6), which can be displaced against the force of a brake spring (11) axially with respect to the latter and is connected to a shaft (4), the shaft being mounted in end plates of a motor casing and the displacement-type rotor being supported in a rotationally rigid manner on the shaft via a deformation member, which is attached to the shaft (4) and transmits the torque, the deformation member comprising a frame (17, 17a) with attachment points (17b, 17c) disposed on its edge, two attachment points (17b, 17c) of which are in each case connected to an extension (31) of the displacement-type rotor (6) and the driving arms (15a) of a support ring (15), characterised in that the deformation member consists of two frames (17, 17a), one (17a) of which is connected by two of its attachment points (17b) to a connection plate (19), which is connected to the extension (31) of the displacement-type rotor, the other (17) of which is connected by two of its attachment points to the driving arms (15a) of the support ring (15), and the two are connected together by their respective remaining attachment points (17c) via a transmission member (18).

2. Displacement-type rotor motor according to claim 1, characterised in that the transmission member (18) comprises at its ends distance sleeves (18b), which are coaxial with the attachment points (17c), for rivets (16a) and a central bore (18a) for the passage of the shaft (4).

3. Displacement-type rotor motor according to claim 1, characterised in that the connection plate (19) comprises connection projections (19a) with connection bores (19b) for connection to the frame (17a), and that the connection plate (19) comprises bores (19c) next to the straight area of the frames (17, 17a) for screws (20) for attachment to the extension (31) of the displacement-type rotor.

4. Displacement-type rotor motor according to claim 3, characterised in that the screws (20) are screwed into distance tubes (21) and connect the brake ring (28) and the connection plate (19) to the extension (31) of the displacement-type rotor.

5. Displacement-type rotor motor according to claim 1, characterised in that the frames (17, 17a) are connected to the transmission member (18), the connection plate (19) and the support ring (15) by means of rivets (16).

6. Displacement-type rotor motor according to claim 1, characterised in that the attachment points (17b) of the frames (17, 17a) are disposed coaxially with one another.

7. Displacement-type rotor motor according to claim 1, characterised in that a damping member (22) is disposed between a tube (10), which bears the displacement-type rotor (6), and a collar (24) of the shaft (4).

8. Displacement-type rotor motor according to claim 1, characterised in that the extension (31) of the displacement-type rotor comprises recesses (32) for the driving arms (15a).

## Revendications

1. Moteur à rotor coulissant, comportant un stator et un rotor coulissant (6) pouvant se déplacer axialement par rapport à celui-ci et relativement contre la force d'un ressort de freinage (11), rotor coulissant (6) qui est relié à un arbre (4), l'arbre étant monté sur des paliers d'un boîtier de moteur, et le rotor coulissant étant en appui mécanique sur l'arbre par l'intermédiaire d'un élément de déformation fixé sur l'arbre (4) et transmettant le moment de torsion, l'élément de déformation présentant un cadre (17,17a) comportant sur son bord des zones de fixation (17b,17c), desquelles à chaque fois deux zones de fixation (17b,17c) sont reliées à un prolongement (31) du rotor coulissant (6) ou à des bras d'entraînement (15a) d'une bague de support (15),
caractérisé en ce que l'élément de déformation est constitué de deux cadres (17,17a), desquels
- l'un (17a) est relié par deux de ses zones de fixation (17b) à une plaque de raccordement (19) reliée au prolongement (31) du rotor coulissant,
- l'autre (17) est relié par deux de ses zones de fixation aux bras d'entraînement (15a) de la bague de support (15), et
- les deux sont reliés ensemble par leurs zones de fixation (17c) à chaque fois restantes, par l'intermédiaire d'un élément de transfert (18).

2. Moteur à rotor coulissant selon la revendication 1, caractérisé en ce que l'élément de transfert (18) présente à ses extrémités, coaxialement aux zones de fixation (17c), des douilles d'écartement (18b) pour des rivets (16a) et un perçage central (18a) pour le passage de l'arbre (4).

3. Moteur à rotor coulissant selon la revendication 1, caractérisé en ce que la plaque de raccordement (19) présente des saillies de raccordement (19a) comportant des perçages de raccordement (19b) jusqu'au cadre (17a) et en ce que la plaque de raccordement (19) présente, à côté de la zone rectiligne des cadres (17,17a), des perçages (19c) pour des vis (20) pour la fixation au prolongement (31) du rotor coulissant.

4. Moteur à rotor coulissant selon la revendication 3, caractérisé en ce que les vis (20) sont vissées dans des tubes d'écartement (21) et relient la bague de freinage (28) et la plaque de raccordement (19) au prolongement (31) du rotor coulissant.

5. Moteur à rotor coulissant selon la revendication 1, caractérisé en ce que les cadres (17,17a) sont reliés, au moyen de rivets (16), à l'élément de transfert (18), la plaque de raccordement (19) ou la bague de support (15).

6. Moteur à rotor coulissant selon la revendication 1, caractérisé en ce que les zones de fixation (17b) des cadres (17,17a) sont agencées coaxialement les unes par rapport aux autres.

7. Moteur à rotor coulissant selon la revendication 1, caractérisé en ce qu'un élément d'amortissement (22) est agencé entre un tube (10) portant le rotor coulissant (6) et un collet (24) de l'arbre (4).

8. Moteur à rotor coulissant selon la revendication 1, caractérisé en ce que le prolongement (31) du rotor coulissant présente des évidements (32) pour les bras d'entraînement (15a).
